# EUROPEAN PATENT APPLICATION

(11) **EP 4 488 863 A1**
(43) Date of publication of application: **08.01.2025**
(21) Application number: 23183808.7
(22) Date of filing: 06.07.2023
(51) Int. Cl.: G06F 21/57, H04L 9/08

(54) **EXTENDED STORAGE FOR A TRUSTED PLATFORM MODULE**

(71) Applicant: Diebold Nixdorf Systems GmbH, 33106 Paderborn (DE)
(72) Inventor: ANDERKA, Maik, 34454 Bad Arolsen (DE); WESTERWELLE, Max, 33098 Paderborn (DE); VON DER LIPPE, Carsten, 33098 Paderborn (DE)
(74) Representative: Viering, Jentschura & Partner mbB Patent- und Rechtsanwälte

(57) **Abstract**

The present disclosure relates to a computer system (200) including a processor (202) configured to: carry out a cryptographic operation (204) using first cryptographic information (206) and second cryptographic information (208), wherein the first cryptographic information (206) is stored in a Trusted Platform Module (210), and wherein the processor (202) is configured to retrieve the second cryptographic information (208) from one or more UEFI variables (212).

## Description

### Technical Field

The present disclosure relates generally to a configuration to extend the available storage space for a Trusted Platform Module, and methods thereof (e.g., a method to carry out a cryptographic operation using an extended storage space of a Trusted Platform Module, and a method of storing cryptographic information in an extended storage space of a Trusted Platform Module).

### Background

Nowadays, virtually all personal computers (PCs) are equipped with a Trusted Platform Module (TPM). A TPM is a dedicated microcontroller designed to secure hardware through integrated cryptographic keys. A TPM may be a hardware component (or, in some cases, a software component) that enables security-related functions. The architecture of the TPM makes it resistant to malicious attacks, so that the TPM may provide a trusted environment for cryptographic functionalities, e.g. a TPM may be understood as a secure crypto-processor. As examples, a TPM may provide boot-up protection in a PC and/or may protect cryptographic keys used for disk encryption, and/or the like. Improvements in the operation of a TPM may thus be of particular relevance for further advancements in the security of computing platforms.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects of the invention are described with reference to the following drawings, in which:
FIG. 1 shows a Trusted Platform Module in a schematic representation, according to various aspects;
FIG.2A shows a computer system including a Trusted Platform Module in a schematic representation, according to various aspects;
FIG.2B shows a plurality of UEFI variables of the computer system in a schematic representation, according to various aspects;
FIG.2C shows a non-volatile storage of the computer system in a schematic representation, according to various aspects;
FIG.3A to FIG.3D show various types of cryptographic information in a schematic representation, according to various aspects;
FIG.4 shows a verification of cryptographic information stored in one or more UEFI variables in a schematic representation, according to various aspects;
FIG. 5 shows a schematic flow diagram of a method of carrying out a cryptographic operation, according to various aspects;
FIG.6 shows a computer system including one or more UEFI variables in a schematic representation, according to various aspects; and
FIG.7 shows a schematic flow diagram of a method of storing cryptographic information in one or more UEFI variables, according to various aspects.

### Description

The following detailed description refers to the accompanying drawings that show, by way of illustration, specific details and aspects in which the invention may be practiced. These aspects are described in sufficient detail to enable those skilled in the art to practice the invention. Other aspects may be utilized and structural, logical, and electrical changes may be made without departing from the scope of the invention. The various aspects are not necessarily mutually exclusive, as some aspects may be combined with one or more other aspects to form new aspects. Various aspects are described in connection with methods and various aspects are described in connection with devices (e.g., a TPM, a computer system including a TPM). However, it is understood that aspects described in connection with methods may similarly apply to the devices, and vice versa.

In general, a TPM may provide support to a computer system for performing cryptographic-related operations in a secure way. Illustratively, a TPM may be a trusted component that enables trusted computing functions, such as platform integrity measurement, platform authentication, platform attestation, protected storage, and the like. As an example, for cryptographic operations involving an encryption algorithm, an entity to be protected (e.g., data, a message, a connection, etc.) may be encrypted using an encryption key. If the encryption key is then stored in a general memory of a computer system, or in a hard drive, a malicious user may find a way to access the encryption key, thus compromising the security of the system. In this framework, a TPM provides a secure environment, e.g., for storing keys in a way that makes the keys accessible by the system, but protects them from attacks or tampering attempts.

Applications that use a TPM often require additional data, such as digital certificates, to be stored persistently along with the cryptographic keys. In general, the non-volatile storage of a TPM provides a small general-purpose data storage area for persistent data. However, the available non-volatile storage in a TPM is often too small to store the required additional data, for instance if several digital certificates need to be stored. In this scenario, storing the additional data on the hard disk drive (HDD) is not a suitable alternative, since HDD-storage cannot be considered as persistent in general. For example, a hard disk drive may be replaced due to a defect, or may be cleaned for a new software installation. It could therefore happen that the data in the TPM is not in synchronization with the additional data stored in the HDD.

The present disclosure is based on the realization that the UEFI variables (usually used in a computer system to manage the boot process) may provide additional storage space for TPM-related data. Illustratively, the present disclosure is based on the realization that the UEFI variables may be used to store TPM-related data outside of a TPM, thus extending the available (persistent) storage and enhancing the operation of the TPM. Compared to other possible solutions, storing TPM-related data in the UEFI variables ensures that the access to the data is standardized and does not require special tooling. In some aspects, the data may be stored in the same integrated circuit, thus providing a rapid and robust configuration. The approach proposed herein provides thus an efficient and reproducible configuration for enhancing cryptographic-related operations in a computer system.

According to various aspects, a computer system may include a processor configured to: carry out a cryptographic operation using first cryptographic information and second cryptographic information, wherein the first cryptographic information is stored in a Trusted Platform Module, and wherein the processor is configured to retrieve the second cryptographic information from one or more UEFI variables.

According to various aspects, a method of carrying out a cryptographic operation (e.g., in a computer system) may include: carrying out the cryptographic operation using first cryptographic information and second cryptographic information, wherein the first cryptographic information is stored in a Trusted Platform Module, and wherein the second cryptographic information is stored in one or more UEFI variables (and retrieved from the one or more UEFI variables).

According to the approach proposed herein, the cryptographic information stored inside the TPM (for example, a cryptographic key) may be supplemented with cryptographic information stored externally to the TPM, in the UEFI variables, thus increasing the amount of available information and accordingly the number of scenarios in which the TPM may be applied, while maintaining a standardized operation. By way of illustration, aspects of the present disclosure relate to using one or more UEFI variables as storage space for cryptographic information associated with further cryptographic information stored in a TPM.

According to various aspects, a computer system may include: a non-volatile storage; and a processor configured to: generate or receive cryptographic information associated with a cryptographic operation; allocate at least part of a UEFI portion of the non-volatile storage to storing the cryptographic information; and cause a writing of the cryptographic information in the allocated part of the UEFI portion of the non-volatile storage. Illustratively, the cryptographic operation may be a TPM-related cryptographic operation, e.g. a further part of cryptographic information associated with the cryptographic operation may be stored in the TPM.

According to various aspects, a method of storing cryptographic information may include: generating or receiving cryptographic information associated with a cryptographic operation (illustratively, a TPM-related operation); allocating at least part of a UEFI portion of a non-volatile storage to storing the cryptographic information; and writing the cryptographic information in the allocated part of the UEFI portion of the non-volatile storage.

The strategy described herein may thus include using part of the memory area dedicated to UEFI variables for storing cryptographic information to be used in combination with cryptographic information stored inside a TPM. The memory area may be in a non-volatile storage (e.g., a non-volatile memory of a motherboard of the computer system). This provides an extension of the storage space available for the TPM in a way that may be implemented without affecting the overall architecture of the system or without introducing dedicated hardware/software tools.

The term "UEFI variable" may be used herein as commonly understood in the art. In general, "UEFI" (Unified Extensible Firmware Interface) may refer to a set of specifications defining a general framework for the interaction between the operating system (OS) of a computer and the underlying firmware. UEFI provides a standard environment for booting the operating system, and for carrying out operations during or prior to the booting process. In this context, the UEFI specification (e.g., the UEFI Specification Version 2.10 released by the UEFI Forum in August 2022) defines variables (illustratively, the "UEFI variables") through which the operating system may interact with the firmware. A "UEFI variable" may thus be a variable that stores data that is exchanged between the UEFI environment and OS loaders or other applications. A "LTEFI variable" may thus be a variable that is part of a "LTEFI environment" of a computer system, e.g. a UEFI environment providing a framework for a boot loader of the computer system.

In general, there may be two types of UEFI variables, namely UEFI boot variables and UEFI runtime variables. A UEFI boot variable may be used by the boot loader during a startup of the computer system. A UEFI runtime variable may allow the operating system to control one or more settings of the firmware and/or to control various runtime protocols. The UEFI environment may include a non-volatile storage, e.g. a non-volatile random access memory (NVRAM), to persistently store the UEFI variables. The boot loader may load boot information from the non-volatile storage, thus allowing to use the UEFI variables to control the booting process of the computer system. References herein to a UEFI variable may apply in a corresponding manner to a UEFI boot variable and/or a UEFI runtime variable.

By way of illustration, "UEFI" may be understood as a low-level software that starts before booting the operating system, and provides a more powerful solution compared to the Basic Input-Output System (BIOS) used in older generations of computers. Compared to BIOS, UEFI supports larger drives and provides a faster and more standardized booting routine. The UEFI environment may be stored on the motherboard of the computer system (e.g., in a flash memory of the motherboard), or may be loaded from a hard drive upon booting the system.

Initially, this type of environment was defined as EFI (Extensible Firmware Interface) and later evolved into the current UEFI specification as an industry-wide standard managed by the UEFI Forum. It is understood that the aspects of the present disclosure described in relation to a "UEFI environment" or a "LTEFI variable", for example, may apply in a corresponding manner to an "EFI environment" or "EFI variable".

The term "cryptographic operation" may be used herein as commonly understood in the art to describe an operation that involves either receiving an input and delivering a secured output, or receiving a secured input and delivering a (plain) output. Illustratively, a cryptographic operation may include a function (e.g., an algorithm) applied to the input, and additional information, e.g. one or more additional parameters, to be used as part of the function to deliver the output. As examples, a cryptographic operation may include a hashing operation, an encryption, a decryption, a digital signature generation/verification, a message authentication code (MAC) generation/verification, and the like.

The function part of the cryptographic operation may thus include an encryption algorithm, e.g. based on a symmetric key or an asymmetric key (public/private key), such as RSA (Rivest, Shamir, Adelman), AES (Advanced Encryption System), Diffie-Hellman, DES (Data Encryption Standard), as examples. In other aspects, the function part of the cryptographic operation may include a hash function, such as SHA-1 (Secure Hash Algorithm 1), SHA-256, SHA-512, MD4, MD5, BLAKE2, BLAKE3, as examples. In other aspects, the function part of the cryptographic operation may include a function to generate and/or verify a digital certificate (e.g., a digital signature), such as a Digital Signature Algorithm (DSA) or an Elliptic Curve Digital Signature Algorithm (ECDSA), and/or a function to generate and/or verify a MAC.

For example, in a symmetric key algorithm, a single common key is used both at the sender side (to encrypt) and at the receiver side (to decrypt). As another example, in an asymmetric key algorithm, a pair of keys is used, namely a public key at the sender side (to encrypt) and a private key (to decrypt) known only to the intended receiver. For digital certificates of signature, additional information (illustratively, the certificate/signature) is appended to the data, and such additional information is uniquely associated with a verified sender, so that the receiver may verify the identity of the sender by verifying the legitimacy of the certificate/signature.

The term "cryptographic information" may be used herein to describe, in general, any type of information that may be used as part of a cryptographic operation. Illustratively, "cryptographic information" may include information involved in carrying out the cryptographic operation, e.g. the entire cryptographic operation or part of the cryptographic operation. As an example, "cryptographic information" may include a cryptographic key, a pair of cryptographic keys, a digital certificate, a digital signature, a random number, an argument for a hash function, and the like.

Various aspects of the present disclosure are based on the realization that the approach described herein may be of particular relevance for securing communications and transactions in an automated teller machine (ATM, also referred to as automatic teller machine, or automated banking machine). Illustratively, providing an extended storage space for the TPM of the computer system of the ATM may allow to process a wider range of transactions and requests from a customer in a secure manner. Thus, in the following particular reference may be made to applications involving TPM and UEFI variables part of a computer system of an ATM. It is however understood that the use in an ATM may be a relevant use case, but the strategy described herein may in principle be applied to any other suitable scenario in which an extended storage space for a TPM may be beneficial.

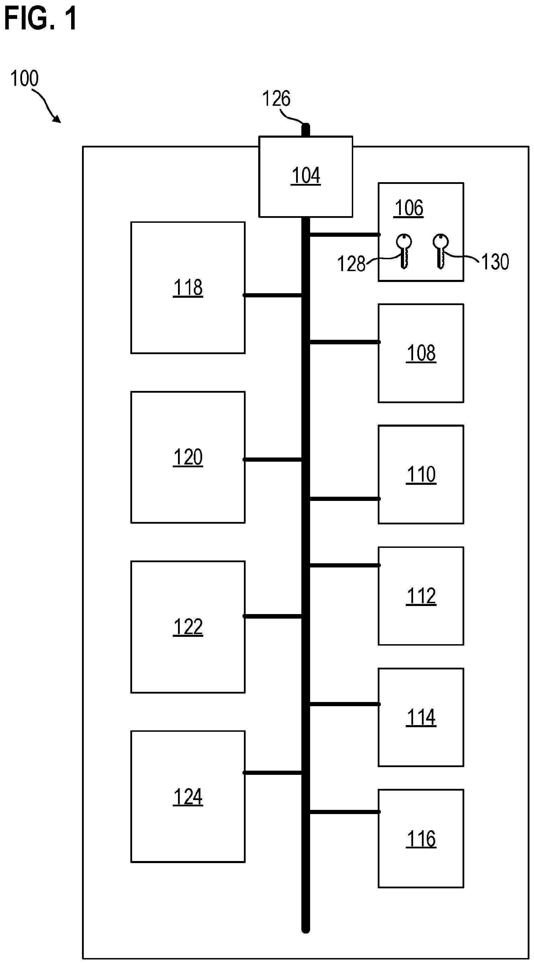

**FIG.1** shows a Trusted Platform Module 100 in a schematic representation according to various aspects. In general, the architecture and operation of a TPM are well known in the art. A brief description is provided herein to introduce aspects relevant for the present disclosure. It is understood that the configuration of the TPM 100 in FIG.1 is exemplary, to introduce general concepts regarding the hardware and software parts of a TPM. It is therefore understood that a TPM (e.g., TPM 100) may include additional, less, or alternative components with respect to those shown, while still maintaining overall a secure environment for supporting cryptographic operations in a computer system.

In principle, a TPM may be implemented as a hardware component or as a software component (e.g., as a virtual TPM). The aspects described herein may refer mainly to a TPM implemented as a hardware component (in a computer system), as this may be the most relevant use case, and since a hardware-based TPM may provide an increased security compared to a software-based TPM. It is however understood that the aspects described herein in relation to a hardware-based TPM may apply in a corresponding manner to a software-based TPM.

In general, a TPM 100 may be configured to provide a foundation of trust in a computer system (illustratively, in a computing platform). The TPM 100 may thus provide a foundation of trust for higher level processes running on a processor of the computer system. A TPM 100 may be configured to implement a plurality of security features. As an example, a TPM 100 may be configured to implement protected capabilities, e.g. the TPM 100 may be configured to identify capabilities of the computer system that are trustworthy and may access a protected location in the TPM where to operate on protected data. As a further example, a TPM 100 may be configured to carry out an integrity measurement to determine one or more integrity parameters (also referred to as integrity metric) associated with the integrity of the processes running on the computer system. As another example, a TPM 100 may be configured to provide integrity reporting to communicate (externally) the configuration of the TPM upon request. As further examples, a TPM may be configured to provide secure storage (e.g., for encrypted data of the user), and process isolation to protect data during runtime.

As an exemplary configuration, the TPM 100 may include: an input/output circuit 104 (also referred to as I/O block); a non-volatile storage 106; platform configuration registers 108; an attestation identity key (AIK) 110; a programme code 112; an opt-in circuit 114; an execution engine 116; a hash engine 118 (e.g., a SHA-1 engine); a random number generator 120; a key generator 122; and a cryptographic engine 124 (e.g., a RSA engine).

The input/output circuit 104 may be configured to manage the flow of input data and output data, illustratively the flow of information on a communication bus 126 of the TPM 100. The input/output circuit 104 may be configured to control the exchange of information among the internal components of the TPM 100. Additionally, the input/output circuit 104 may be configured to control the flow of information towards and from the outside of the TPM 100, e.g. with other components of the computer system.

The non-volatile storage 106 may persistently store cryptographic information to be used in the TPM 100 and/or by the TPM 100. For example, the non-volatile storage 106 may persistently store one or more cryptographic keys associated with the TPM 100, e.g. the Endorsement Key 128 and the Storage Root Key 130, which may be used to securely encrypt/decrypt further information and/or further cryptographic keys. The non-volatile storage 106 may further store additional information, e.g. associated with the computer system, associated with an administrator, and the like.

The Endorsement Key 128 (EK) may be embedded in the TPM 100. In general, the Endorsement Key 128 may include a private key (always remaining within the TPM 100) and a public key that may be used in some specific operations. The Endorsement Key 128 is unique for the corresponding TPM 100, so that the Endorsement Key 128 may allow identifying the corresponding TPM 100. The Storage Root Key 130 (SRK) may be created when the user takes ownership of the TPM 100 and may serve as master (or father) cryptographic key of the TPM 100. Illustratively, the Storage Root Key 130 may be at the top of the hierarchy, and the TPM 100 may use the Storage Root Key 130 to encrypt other keys stored in the TPM (illustratively, under the SRK in the hierarchy tree) or to be stored in the TPM. The Storage Root Key 130 remains always in the within the TPM 100.

The platform configuration registers 108 may store integrity parameters (e.g., integrity metrics) to measure the integrity of processes running in the computer system. As a numerical example, the TPM 100 may include sixteen platform configuration registers 108, each storing 20 bytes. The TPM 100 may be configured to reset the platform configuration registers 108 upon powering off of the computer system.

The attestation identity key 110 may be stored in the TPM 100, and may serve as a proxy for the Endorsement Key 128. The TPM 100 may include more than one attestation identity key 110, e.g. one for each service provider with which the computer system may interact. The attestation identity key(s) 110 may be stored in the non-volatile storage 106 of the TPM 100, or may be stored in an external storage and loaded into a volatile storage of the TPM 100 during runtime.

The programme code 112 (illustratively, a firmware) may define how the TPM 100 is initialized and how the TPM 100 carries out its operations. Illustratively, the programme code 112 may define the programming of the TPM 100, and may be considered as a root of trust for the entire computer system. The execution engine 116 may be configured to run the programme code 112, e.g. in response to inputs coming from external services (e.g., from the processor of the computer system).

The opt-in circuit 114 may allow the user to "opt-in" and take ownership of the TPM 100. Illustratively, the opt-in circuit 114 may maintain one or more persistent and/or volatile flags allowing the TPM 100 to be delivered to the user in a desired state. The input/output circuit 104 may use the one or more persistent and/or volatile flags to determine whether a component of the TPM 100 may be accessed (e.g., from another service of the computer system).

The hash engine 118 may be configured to hash input data and deliver a corresponding hashed output. As an example, the hash engine 118 may be configured to implement a SHA-1 function. As exemplary applications, the hash engine 118 may be configured to deliver a hash to be used as MAC, or as digital signature.

The random number generator 120 may be configured to generate "true" random numbers. Illustratively, the random number generator 120 may be configured to use a random source (rather than a deterministic approach) to generate random numbers for various cryptographic operations, e.g. for providing cryptographic keys. As an example, the random number generator 120 may be configured to use hardware-generated noise to generate a random number.

The key generator 122 may be configured to generate cryptographic keys to support the secure cryptographic operations to be carried out by the TPM and/or in the computer system, such as digital signing, secure storage, and the like. As an example, the key generator 122 may be a RSA key generator. As a numerical example, the key generator 122 may be configured to generate 2048-bits keys.

The cryptographic engine 124 may be configured to execute one or more predefined cryptographic algorithms. As an example, commonly used in TPMs, the cryptographic engine 124 may be a RSA engine configured to execute a RSA algorithm. The cryptographic engine 124 may be instructed to execute the algorithm to carry out a desired operation, such as encryption, decryption, signing, wrapping, sealing, etc.

As mentioned above, the present disclosure is based on the realization that the non-volatile storage of a TPM (e.g., the non-volatile storage 106 of the TPM 100) has only limited storage capabilities. In general, further information in addition to cryptographic keys may be needed to carry out cryptographic operations associated with the TPM, and the non-volatile storage of the TPM may not have sufficient space to store such additional information. According to various aspects, as discussed in further detail below, one or more UEFI variables of a computer system may be used to store additional information to supplement the information stored internally in the TPM. This configuration offers a flexible, yet reliable approach to enhance the capabilities of the TPM and of the associated computer system.

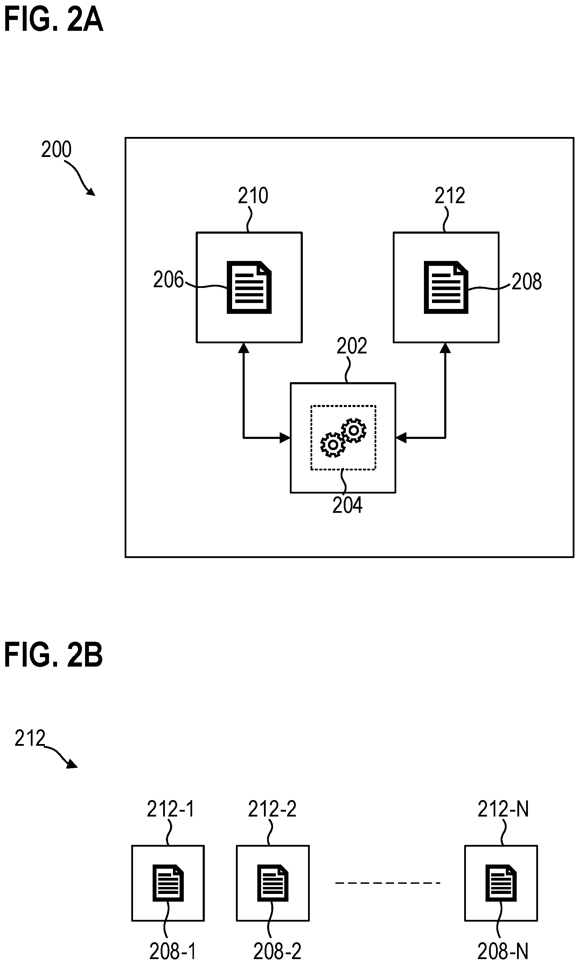

**FIG.2A** shows a computer system 200 including a TPM 210 in a schematic representation, according to various aspects. For example, the TPM 210 may be configured as the TPM 100 described in FIG. 1. The computer system 200 may be for use in any suitable application or any suitable device. As an example, which may be the most relevant use case for the strategy proposed herein, the computer system 200 may be for use in an ATM, e.g. an automated teller machine may include the computer system 200. In this scenario, the computer system 200 may be configured to control an operation of the ATM, e.g. financial transactions, external communication, internal communication, and the like. The computer system 200 may also be referred to as computing system, computing environment, or computing platform. It is understood that the representation of the computer system 200 may be simplified for the purpose of illustration, and the computer system 200 may include additional components with respect to those shown. As examples, the computer system 200 may include a communication circuit, input devices, output devices, and/or the like.

The computer system 200 may include a processor 202 configured to run processes in the computer system 200. The processor 202 may be configured to control an operation of the computer system 200. According to various aspects, the processor 202 may be configured to carry out a cryptographic operation 204 using first cryptographic information 206 and second cryptographic information 208. In some aspects, the processor 202 may be configured to carry out the entire cryptographic operation 204, illustratively up to completion (e.g., up to delivering a corresponding final output). In other aspects, the processor 202 may be configured to carry out a part of the cryptographic operation 204 (using the cryptographic information 206, 208) and to deliver a partial output for further processing. In other aspects, the processor 202 may be configured to instruct another entity (e.g., another processor, e.g. the TPM 210) to carry out the cryptographic operation 204 (or part of the cryptographic operation 204) using the cryptographic information 206, 208.

The first cryptographic information 206 may be stored in the Trusted Platform Module 210. Illustratively, the computer system 200 may include the TPM 210, and the TPM 210 may store the first cryptographic information 206 (e.g., in a non-volatile storage of the TPM). As an example, the processor 202 may be configured to retrieve the first cryptographic information 206 from the TPM 210 to carry out the cryptographic operation 204. As another example, the processor 202 may be configured to instruct the TPM 210 to use the first cryptographic information 206 to carry out the cryptographic operation 204 or part of the cryptographic operation 204 internally to the TPM 210 (e.g., in the cryptographic engine). In this scenario, the processor 202 may illustratively be configured to use the first cryptographic information 206 inside the TPM 210. As a further example, the processor 202 may be configured to access the first cryptographic information 206 and copy the accessed first cryptographic information 206 or otherwise extract the accessed first cryptographic information 206. Illustratively, as part of the execution of the cryptographic operation 204, the first cryptographic information 206 may leave the TPM 210 or may remain within the TPM 210, e.g. depending on the type of operation/information.

The second cryptographic information 208 may be stored in one or more UEFI variables 212 of the computer system 200. Illustratively, the computer system 200 may include a plurality of UEFI variables (e.g., stored in a non-volatile storage, as discussed in further detail below), and one or more of the UEFI variables may be dedicated to storing cryptographic information 208 to be used in combination with cryptographic information 206 stored in the TPM 210. According to the strategy discussed herein the computer system 200 may include (e.g., store) one or more UEFI variables 212 configured/used to store TPM-related cryptographic information 208, illustratively cryptographic information 208 logically associated with corresponding cryptographic information 206 stored in the TPM 210.

The UEFI variables may be part of a UEFI environment of the computer system 200 and may in general store information (e.g., variables, parameters, instructions, etc.) used during a booting process of the computer system 200. Illustratively, a boot loader of the computer system 200 may be configured to access the UEFI variables during the booting process and/or in preparation of the booting process to retrieve information to be used for booting up the computer system 200. At least one of the UEFI variables may be used as additional storage space for the TPM 210.

The processor 202 may be configured to retrieve the second cryptographic information 208 from the one or more UEFI variables 212. As an example, the processor 202 may be configured to directly use the retrieved second cryptographic information 208 to carry out the cryptographic operation 204. As another example, the processor 202 may be configured to deliver the retrieved second cryptographic information 208 to another entity (e.g., to the TPM 210) together with the instruction to carry out the cryptographic operation 204 or part of the cryptographic operation 204.

By way of illustration, the configuration of the computer system 200 may thus be based on using one or more UEFI variables 212 as additional (non-volatile) storage for the TPM 210. The UEFI variables 212 may thus store information to support cryptographic-related functions that rely on cryptographic information stored in the TPM 210 and/or used inside the TPM 210.

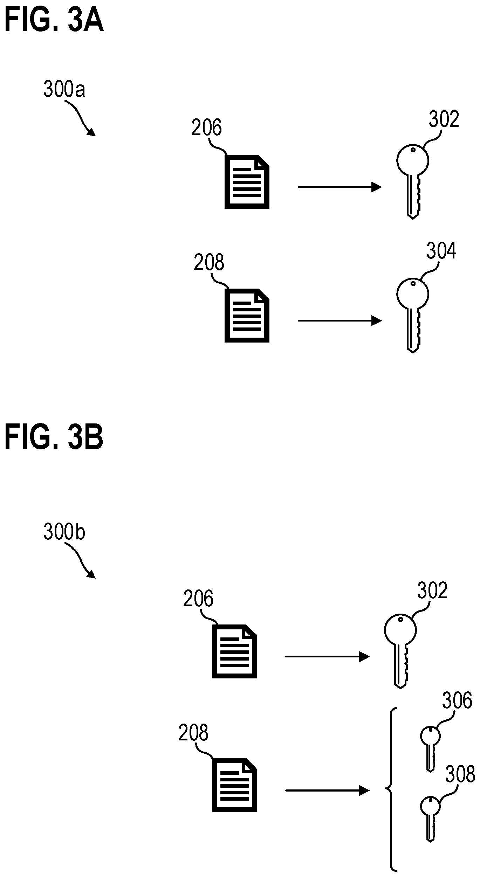

Various examples of cryptographic operation 204 and of cryptographic information 206, 208 will be discussed in further detail below, e.g. in relation to FIG.3A to FIG.3D. As an abridged overview, for example, carrying out the cryptographic operation 204 may include the processor 202 being configured to verify a certificate using the first cryptographic information 206 and second cryptographic information 208. For example, the processor 202 may decrypt the certificate using a first cryptographic key stored in the TPM 210 and a second cryptographic key stored in the UEFI variables 212. As another example, the processor 202 may compare a received certificate with a reference certification element stored in the TPM 210 and/or in the UEFI variables 212.

As a further example, carrying out the cryptographic operation 204 may include the processor 202 being configured to secure a communication between the computer system 200 and a further computer system. For example, the processor 202 may encrypt a connection with the further computer system (or a message to be sent to the other computer system) using a first cryptographic key stored in the TPM 210 and a second cryptographic key stored in the UEFI variables 212. The further computer system may be, for example, a mobile device of a user, e.g. a user of an ATM including the computer system 200.

As a further example, carrying out the cryptographic operation 204 may include the processor 202 being configured to secure a request for a financial transaction. For example, the processor 202 may encrypt a connection over which the financial transaction is executed (e.g., sent and confirmed) using a first cryptographic key stored in the TPM 210 and a second cryptographic key stored in the UEFI variables 212.

According to various aspects, as shown in **FIG.2B****,** the one or more UEFI variables 212 storing the TPM-related cryptographic information may include a plurality of UEFI variables 212. Illustratively, the computer system 200 may include a plurality of UEFI variables 212 dedicated to extend the TPM-storage. In a simple configuration, the TPM-related cryptographic information may be stored in two UEFI variables, illustratively a first UEFI variable 212-1 and a second UEFI variable 212-2. It is however understood that any suitable number "N" of LTEFI variables may be used to store TPM-related cryptographic information (e.g., up to an n-th UEFI variable 212-N), e.g. two, three, four, five, ten, or more than ten UEFI variables.

Each of the plurality of UEFI variables 212-1, 212-2,..., 212-N may store respective cryptographic information 208-1, 208-2,..., 208-N. In various aspects, the cryptographic information 208 associated with the cryptographic operation 204 to be carried out by the processor 202 may be split over more than one UEFI variable (e.g., in case of particularly large data). In this scenario, the processor 202 may be configured to retrieve the (second) cryptographic information 208 from more than one UEFI variable. For example, the processor 202 may be configured to retrieve a first part of the (second) cryptographic information 208 from a first UEFI variable 212-1, and a second part of the (second) cryptographic information 208 from a second UEFI variable 212-2. The processor 202 may be further configured to retrieve an n-th part of the (second) cryptographic information 208 from an n-th UEFI variable 212-N, etc.

In some aspects, each of the plurality of UEFI variables 212-1, 212-2,..., 212-N may store cryptographic information 208-1, 208-2,..., 208-N corresponding to different cryptographic operations (e.g., each cryptographic information 208-1, 208-2,..., 208-N may be a different key, or a different digital signature, as examples). In other aspects, subsets of the plurality of UEFI variables 212-1, 212-2, ..., 212-N may store cryptographic information 208-1, 208-2,..., 208-N corresponding to the same cryptographic operation, illustratively split across the UEFI variables 212-1, 212-2,..., 212-N in the subset. A subset of UEFI variables 212-1, 212-2,..., 212-N may include more than one UEFI variable 212-1, 212-2,..., 212-N but less than the total number of UEFI variables 212-1, 212-2,..., 212-N.

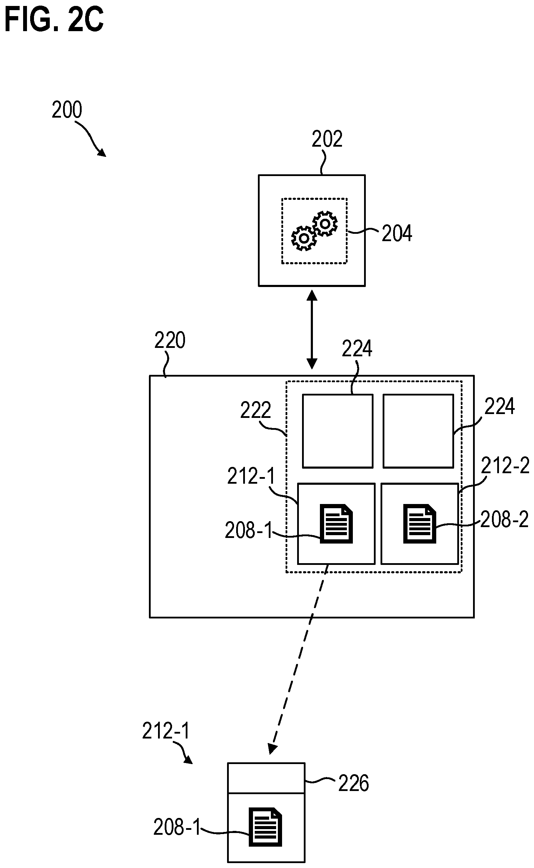

According to various aspects, as shown in **FIG.2C****,** the computer system 200 may include a non-volatile storage 220, illustratively a non-volatile memory, such as a non-volatile random access memory (NVRAM). As examples, the non-volatile storage 220 may be or include a flash memory, a magneto-resistive random access memory, a ferroelectric random access memory, etc., used for long-term data storage. The non-volatile storage 220 may include at least a portion 222 dedicated to storing the UEFI variables of the computer system 200. The portion 222 may be referred to herein as UEFI portion, UEFI memory portion, or UEFI partition. In other aspects, the non-volatile storage 220 may be entirely dedicated to storing the UEFI variables of the computer system 200.

The non-volatile storage 220 (e.g., in the UEFI portion 222) may thus store one or more UEFI variables 224 for LTEFI-related functionalities, e.g. storing information for the booting process of the computer system 200, and the one or more UEFI variables 212 (e.g., first to n-th UEFI variables) storing TPM-related cryptographic information. In various aspects, the UEFI variables 212 storing TPM-related cryptographic information may be part of the same namespace of the non-volatile storage 220 (illustratively, may be stored within a same logical block of the non-volatile storage 220, thus facilitating retrieval by the processor 202).

To retrieve the (second) cryptographic information 208 from the UEFI variables 212 the processor 202 may be configured to access the non-volatile storage 220 (e.g., the UEFI memory portion 222) and identify which UEFI variable or variables 212 store(s) the cryptographic information 208 corresponding to the cryptographic operation 204 to be carried out.

In various aspects, at least one, or more than one, or each UEFI variable 212 (as well as the other UEFI variables 224) may include identifier information 226, as shown in FIG.2C for one of the LTEFI-variables 212. A UEFI variable 212 may thus include an identifier portion storing the identifier information 226 and a data portion storing the cryptographic information 208 (or LTEFI-related information for a UEFI variable 224). The identifier information 226 may be uniquely associated with the corresponding UEFI variable 212 any may allow the processor 202 to find the UEFI variable 212 within the non-volatile storage 220. Illustratively, the processor 202 may be configured to use the identifier information 226 of the UEFI variable 212 to determine a storage location of the corresponding (second) cryptographic information 208. As an example, the identifier information 226 may be a Globally Unique Identifier associated with the UEFI variable 212, 224.

In general, the non-volatile storage 220 may be disposed at any suitable location within the computer system 200. In a preferred configuration that ensures a secure and reliable operation, the non-volatile storage 220 may be part of the motherboard of the computer system 200, e.g. the non-volatile storage 220 may be integrated on the motherboard. In some aspects, also the processor 202 may be part of the motherboard of the computer system 200. In some aspects, the motherboard may also include a location (e.g., a slot) for accommodating the TPM 210, illustratively to allow coupling the TPM 210 to the motherboard. For example, the TPM 210 may be removably coupled with the motherboard at the dedicated slot. As another example, the TPM 210 may be permanently coupled (illustratively, fixed, e.g., soldered) with the motherboard at the dedicated slot.

**FIG.3A** to **FIG.3D** show various types of cryptographic information in a schematic representation, according to various aspects. Illustratively, FIG.3A to FIG.3D show respective configurations 300a-300d of the first cryptographic information 206 and second cryptographic information 208 described in relation to FIG.2A to FIG.2C. It is understood that the aspects discussed in relation to FIG.3A to FIG.3D relate to exemplary configurations that cover relevant use cases for the approach proposed herein. The types of cryptographic information that may be stored in a TPM and/or in UEFI variables is however, in principle, not limited to the exemplary configurations of FIG.3A to FIG.3D.

According to various aspects, as shown in FIG.3A, the cryptographic information may be or include cryptographic keys, e.g. to be used as part of an encryption and/or decryption cryptographic operation. In this configuration 300a, the first cryptographic information 206 may be or include a first cryptographic key 302, and the second cryptographic information 208 may be or include a second cryptographic key 304. In this configuration, the processor 202 may be configured to carry out, for example, an encryption using the first cryptographic key 302 and second cryptographic key 304 to encrypt an input to be protected, or a decryption using the first cryptographic key 302 and second cryptographic key 304 to decrypt an encrypted input.

As an exemplary configuration, the first cryptographic key 302 may be a first part of a symmetric key associated the cryptographic operation (illustratively, associated with an input to be encrypted/decrypted), and the second cryptographic key 304 may be a second part of the symmetric key. The processor 202 may be configured to combine the first cryptographic key 302 with the second cryptographic key 304 (e.g., by appending one key to the other) to derive the symmetric key to be used for the encryption/decryption, and carry out the cryptographic operation using the derived public key.

As another example, the first cryptographic key 302 may be a private key associated with the cryptographic operation (illustratively, associated with an input to be encrypted/decrypted), and the second cryptographic key 304 may be a public key associated with the cryptographic operation. This configuration may ensure a secure storage for the private key. The processor 202 may be configured to use the public key for encrypting an input as part of the cryptographic operation (e.g., a message to be transmitted) and to use the private key for decrypting an encrypted input (e.g., a received message) as part of the cryptographic operation.

According to various aspects, the second cryptographic information 208 (e.g., the second cryptographic key 304, or other type of cryptographic information) may be encrypted with a cryptographic key stored in the TPM 210, e.g. with the first cryptographic key 302. In this scenario, the processor 202 may be configured to retrieve the first cryptographic key 302 and use the first cryptographic key 302 to decrypt the second cryptographic information 208. Alternatively, the processor 202 may be configured to instruct the TPM 210 to decrypt the second cryptographic information 208, illustratively inside the TPM 210, and then transmit back to the processor 202 the decrypted second cryptographic information 208. The processor 202 may be configured to then use the decrypted second cryptographic information 208 for the cryptographic operation, e.g. as a key to encrypt/decrypt an input, as a digital certificate/signature, as a MAC, and the like.

For example, the second cryptographic information 208 may be a (second) cryptographic key 304 that is wrapped or sealed with a cryptographic key stored in the TPM 210, e.g. with the first cryptographic key 302. In the context of TPM, the terms "wrapping" and "sealing" are well known. A "wrapped" entity (e.g., a wrapped cryptographic key) may be encrypted with a cryptographic key that is stored in the TPM 210 and does not leave the TPM 210. The TPM 210 may thus receive the wrapped entity, carry out an "unwrapping" (illustratively, a decryption) and then return the "unwrapped" (decrypted) entity outside of the TPM 210. A "sealed" entity (e.g., a sealed cryptographic key) may be encrypted (wrapped) with a cryptographic key that is stored in the TPM 210 (and does not leave the TPM 210) and additionally is associated with certain platform measurements. The TPM 210 may thus receive the sealed entity, carry out an "unsealing" (illustratively, a decryption) using the corresponding key and verifying that the platform measurements correspond to the platform measurements tied with the sealed entity. The TPM 210 may then return the "unsealed" (decrypted) entity outside of the TPM 210.

In this scenario, the processor 202 may be configured to instruct the TPM 210 to unwrap or unseal the retrieved second cryptographic information 208 (illustratively, the second cryptographic key 304). For example, the processor 202 may be configured to instruct the TPM 210 to carry out an unwrapping or unsealing using the first cryptographic key 302, and then send back to the processor 202 the unwrapped/unsealed second cryptographic information 208.

In an exemplary configuration, the second cryptographic information 208 may be encrypted with the storage root key of the TPM 210. Illustratively, the first cryptographic information 206 may be the storage root key of the TPM 210, and the processor 202 may be configured to instruct the TPM 210 to use the storage root key to decrypt (e.g., unwrap, or unseal) the second cryptographic information 208, e.g. the second cryptographic key 304. In another exemplary configuration, the second cryptographic information 208 may be encrypted with another key in the hierarchy under the storage root key of the TPM 210.

According to various aspects, as shown in FIG.3B, the second cryptographic information 208 may include a plurality of cryptographic keys associated with the cryptographic operation, e.g. a pair of keys 306, 308 in the exemplary scenario in FIG.3B. Illustratively, in this configuration 300b, the single cryptographic key 304 discussed in relation to FIG.3A may instead be or include a plurality (e.g., a pair) of cryptographic keys 306, 308.

The plurality of cryptographic keys may be encrypted (e.g., wrapped, or sealed) with a cryptographic key stored in the TPM 210, e.g. with the first cryptographic key 302. Illustratively, in this scenario the first cryptographic information 206 may include a cryptographic key to decrypt (e.g., unwrap, or unseal) the plurality of cryptographic keys corresponding to the second cryptographic information 208 (and, optionally, the platform measurements tied with the second cryptographic information 208). As discussed in relation to FIG.3A, the processor 202 may be configured to retrieve the cryptographic key 302 from the TPM 210. Alternatively, the processor may be configured to instruct the TPM 210 to decrypt the second cryptographic information 208 (e.g., in case the cryptographic key 302 shall not leave the TPM 210, for example in case the cryptographic key 302 is the SRK of the TPM 210).

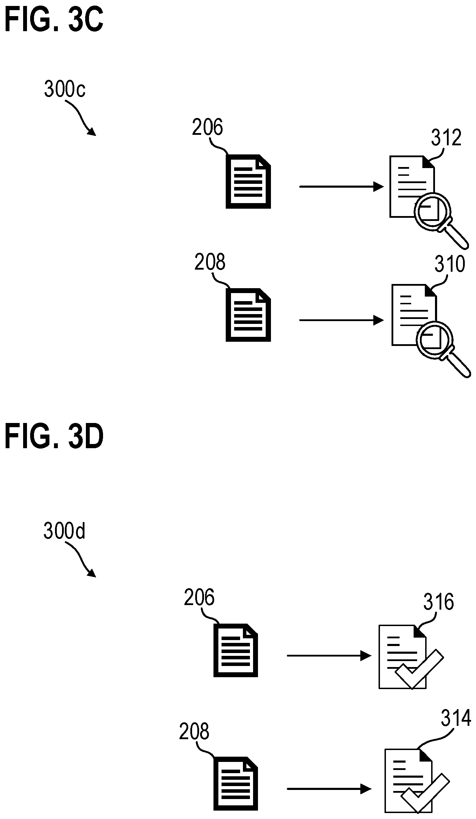

According to various aspects, as shown in FIG.3C, the second cryptographic information 208 may include metadata 310 related to the computer system 200 and/or to the TPM 210. In this configuration 300c, the metadata 310 may be representative of various information descriptive of the computer system 200 and/or to the TPM 210, such as an owner, a model, a firmware version, a data of ownership, and the like. The metadata 310 may allow the processor 202 to verify the legitimacy and integrity of the computer system 200 and/or TPM 210. In this scenario, the processor 202 may be configured to verify the integrity of the computer system 200 and/or of the TPM 210 based on the metadata 310, e.g. by comparing the metadata 310 with predefined (e.g., previously stored) metadata related to the computer system 200 and/or to the TPM 210. The processor 202 may be further configured to carry out the cryptographic operation 204 upon positive verification of the integrity of the computer system 200 and/or of the TPM 210.

In an exemplary configuration, the metadata 310 may be encrypted with a key stored in the TPM 210 (e.g., the first cryptographic information 206 may be the corresponding cryptographic key), as discussed above in relation to FIG.3A and FIG.3B. In this scenario, the processor 202 may decrypt the metadata 310 or instruct the TPM 210 to decrypt the metadata 310 using the corresponding cryptographic key. In another exemplary configuration, the first cryptographic information 206 may include the predefined metadata 312 against which the metadata 310 stored in the UEFI variables are compared. This may ensure secure storage of the reference information for verifying a correct state of the computer system 200 or TPM 210.

According to various aspects, as shown in FIG.3D, the second cryptographic information 208 may include a certification element 314 (e.g., a digital certificate, a digital signature, or a MAC) associated with the cryptographic operation 204. In this configuration 300d, the processor 202 may be configured to carry out the cryptographic operation 204 by using the certification element 314 to certify (e.g., to sign) data to be transmitted, for example by appending the certification element 314 to a message to be transmitted. As an example, the certification element 314 may be associated with a financial transaction to be secured by the processor 202.

In an exemplary configuration, the certification element 314 may be encrypted with a key stored in the TPM 210 (e.g., the first cryptographic information 206 may be the corresponding cryptographic key), as discussed above in relation to FIG.3A and FIG.3B. In this scenario, the processor 202 may decrypt the certification element 314 or instruct the TPM 210 to decrypt the certification element 314 using the corresponding cryptographic key. In another exemplary configuration, the first cryptographic information 206 may include a further certification element 316 associated with the cryptographic operation 204. For example, the certification elements 314, 316 may correspond to two different portions to be combined (e.g., appended) together.

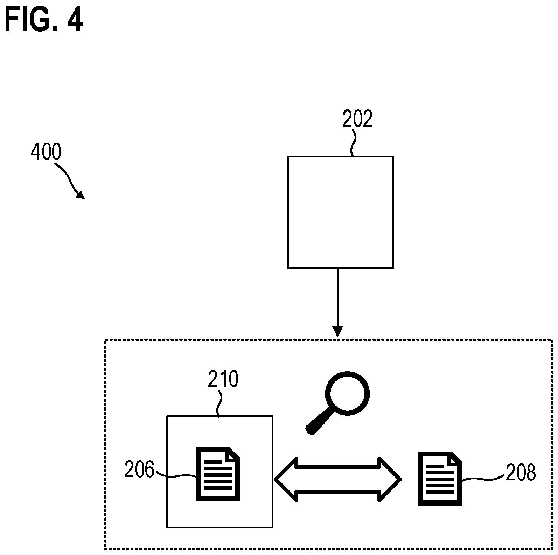

According to various aspects, the processor 202 may be configured to carry out a verification of the cryptographic information retrieved from the one or more UEFI variables 212 prior to carrying out the cryptographic information 204. This is illustrated in **FIG.4** that shows a verification 400 of the second cryptographic information 208 in a schematic representation, according to various aspects.

The processor 202 may be configured to verify whether the second cryptographic information 208 retrieved from the one or more UEFI variables 212 is logically associated with the TPM 210. For example, the processor 202 may be configured to check whether the second cryptographic information 208 logically corresponds to the first cryptographic information 206 (and/or with the desired cryptographic operation 204). Illustratively, the processor 202 may be configured to verify whether the correct information was retrieved from the UEFI variables 212, thus ensuring a smooth and error-free execution of the (subsequent) cryptographic operation 204.

The processor 202 may be further configured to use the second cryptographic information 208 to carry out the cryptographic operation 204 in case of positive verification of the logical association. The processor 202 may thus be configured to proceed further if the processor 202 confirms that the second cryptographic information 208 has a (correct) logical correspondence with the TPM 210 (and with the first cryptographic information 206, or with the cryptographic operation 204). In case of failed verification, e.g. if the wrong information has been retrieved, the processor 202 may be configured to discard the retrieved second cryptographic information 208 and stop the process, and/or fetch new cryptographic information from another one of the UEFI variables 212.

Various mechanisms may be provided for verifying the logical association between the second cryptographic information 208 and the TPM 210. For example, the processor 202 may be configured to execute a hash function (e.g., SHA-1, or another type of hash function) on the second cryptographic information 208, or may be configured to instruct the TPM 218 to execute the hash function on the second cryptographic information 208. The processor 202 may be configured to verify the logical association based on the result of the hash function, illustratively based on whether the resulting hash corresponds to a predefined (expected) result indicative of a correct match.

As another example, the processor 202 may be configured to verify the logical association by checking whether the second cryptographic information 208 includes a certification element associated with the TPM 210. If the certification element is present (and verified) the processor 202 may determine that the second cryptographic information 208 has a logical correspondence with the TPM 210 (and accordingly with the cryptographic information 206). For example, the processor 202 may be configured to verify the logical association by checking whether the second cryptographic information 208 includes Endorsement Certificate information of the TPM 210.

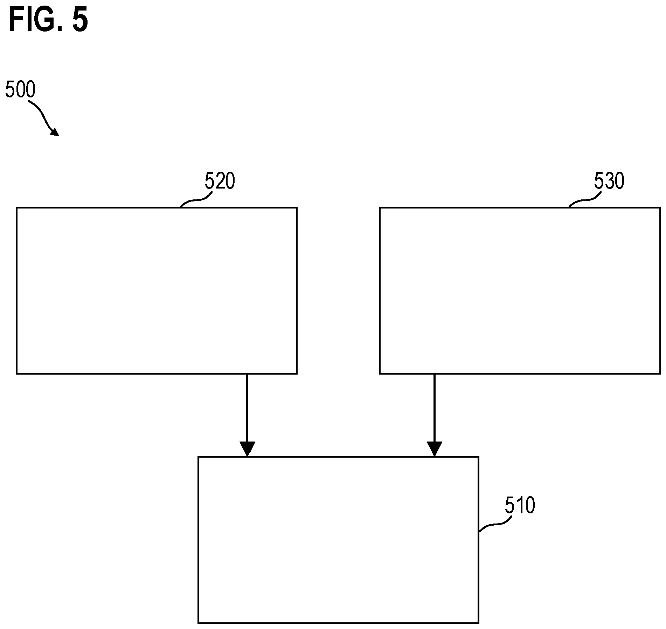

**FIG.5** shows a schematic flow diagram of a method 500 of carrying out a cryptographic operation (e.g., in a computer system), for example the cryptographic operation 204 in the computer system 200. It is understood that the aspects discussed in relation to the computer system in FIG.2A to FIG.4 may apply in a corresponding manner to the method 500, and vice versa.

In general, the method 500 may include using one or more UEFI variables (e.g., stored in a non-volatile storage of the computer system) as extended storage space for a TPM of the computer system. Illustratively, the method 500 may include storing in one or more UEFI variables cryptographic information that is logically associated with the TPM, e.g. cryptographic information that is logically associated with further cryptographic information stored in the TPM.

According to various aspects, the method 500 may include, in 510, carrying out the cryptographic operation using first cryptographic information and second cryptographic information. For example, the method 500 may include encrypting or decrypting an input using a first cryptographic key and a second cryptographic key. As another example, the method 500 may include certifying an input using a first certification element and a second certification element, and the like.

The first cryptographic information may be stored in a TPM of the computer system. In this regard, the method 500 may include, in 520, retrieving the first cryptographic information from the TPM to use the retrieved information to carry out the cryptographic operation, or in general accessing the first cryptographic information in the TPM. As another example, the method may include, in 520, instructing the TPM to use the cryptographic information stored therein to carry out the cryptographic operation or part of the cryptographic operation.

The second cryptographic information may be stored in one or more UEFI variables of the computer system (e.g., in a UEFI portion of a non-volatile storage of the computer system). In this regard, the method 500 may include, in 530, retrieving (in other words, fetching) the second cryptographic information from the one or more UEFI variables. For example, the method 500 may include using identifier information (e.g., a Global Unique Identifier) to retrieve the second cryptographic information from the one or more UEFI variables. It is understood that the method steps 520 and 530 may be carried out in any suitable order, e.g. according to the type of information and/or according to the type of operation.

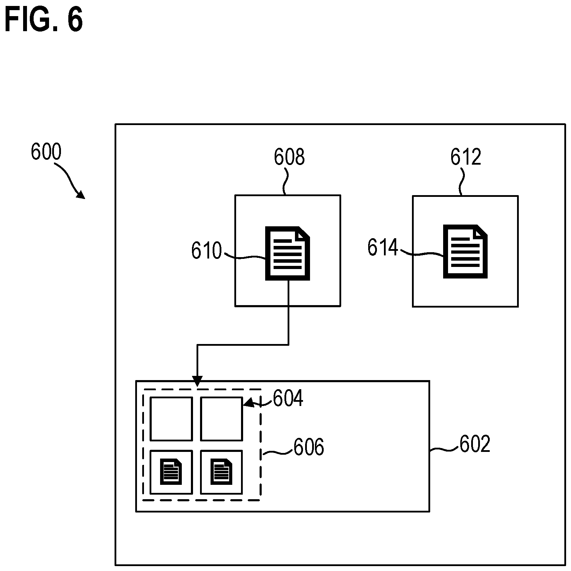

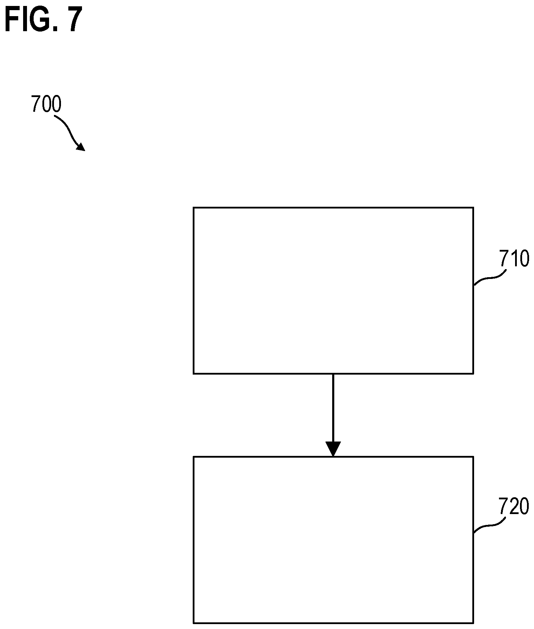

Further aspects of the present disclosure are directed to the writing (illustratively, the saving, or storing) of TPM-related information in one or more of the UEFI variables of a computer system, as discussed in further detail in relation to FIG.6 and FIG.7.

**FIG.6** shows a computer system 600 in a schematic representation, according to various aspects. The aspects described in relation to the computer system 600 may be an additional configuration of the computer system 200, or may be implemented independently of the aspects discussed in relation to the computer system 200. It is understood that the representation of the computer system 600 may be simplified for the purpose of illustration, and the computer system 600 may include additional components with respect to those shown.

The computer system 600 may include a non-volatile storage 602 (e.g., a non-volatile random access memory). For example, the non-volatile storage 602 may be embedded in a motherboard of the computer system 600. The non-volatile storage 602 may be configured to store UEFI variables 604 of the computer system 600. For example, the -volatile storage 602 may include a portion 606 dedicated to storing the UEFI variables 604.

The computer system 600 may include a processor 608 configured to cause a writing of TPM-related cryptographic information 610 in one or more of the UEFI variables 604 of the computer system 600. The processor 608 may be configured to receive the cryptographic information 610 (e.g., from a further computer system), or may be configured to generate the cryptographic information 610. The processor 608 may be configured to use at least some of the UEFI variables 604 as storage space for the cryptographic information 610.

The cryptographic information 610 may be associated with a cryptographic operation. In general, the cryptographic information 610 may be associated with a TPM 612 of the computer system 600. The TPM 612 may be part of the computer system 600, e.g. the TPM 612 may be already installed within the computer system 600 or is expected to be installed in the computer system 600. The cryptographic information 610 may have a logical correspondence with the TPM 612.

In various aspects, the cryptographic information 610 may be associated with further cryptographic information 614 stored in the TPM 612. For example, the cryptographic information 610 may be a cryptographic key encrypted (e.g., wrapped, sealed) with a further cryptographic key stored in the TPM 612. As another example, the cryptographic information 610 may be a certification element (e.g., a digital certificate) associated with a cryptographic key stored in the TPM 612, etc.

According to various aspects, the processor 608 may be configured to allocate part of the non-volatile storage 602 to storing the cryptographic information 610. For example, the processor 608 may be configured to allocate part of the UEFI portion 606 to storing the cryptographic information 610. Illustratively, the processor 608 may be configured to assign one or more of the UEFI variables 604 (e.g., a single one, or a plurality, for example two, in general less than all the available UEFI variables 604) to be used as storage space for TPM-related information 610. The processor 608 may be configured to cause (e.g., instruct) a writing of the cryptographic information 610 into the allocated part of the non-volatile storage 602 (illustratively, in the assigned UEFI variables 604).

**FIG.7** shows a schematic flow diagram of a method 700 of storing cryptographic information (e.g., in a computer system), for example the cryptographic information 610 in the computer system 600. It is understood that the aspects discussed in relation to the computer system in FIG.6 may apply in a corresponding manner to the method 700, and vice versa.

The method 700 may include, in 710, generating or receiving cryptographic information associated with a cryptographic operation. In general, the cryptographic information may be associated with a TPM of the computer system. The cryptographic information 610 may have a logical correspondence with the TPM. In various aspects, the cryptographic information may be associated with further cryptographic information stored in the TPM.

The method 700 may include, in 720, writing the cryptographic information in one or more UEFI variables of the computer system. For example, the method 700 may include allocating part of a non-volatile storage of the computer system to store the cryptographic information, and writing the cryptographic information in the allocated part (e.g., causing a writing or instructing a writing of the cryptographic information). As an example, the allocation may include allocating part of a UEFI portion of the non-volatile storage of the computer system to store the cryptographic information (e.g., assigning one or more of the UEFI variables to store the cryptographic information).

In the following, various examples are provided that refer to computer system 200, 600 and the method 500, 700. It is understood that the examples related to the devices may correspondingly apply to the methods, and vice versa.

Example 1 is a computer system including a processor configured to: carry out a cryptographic operation using first cryptographic information and second cryptographic information, wherein the first cryptographic information is stored in a Trusted Platform Module, and wherein the processor is configured to retrieve the second cryptographic information from one or more UEFI variables. In some aspects, the computer system may include the TPM and a non-volatile storage configured to store the one or more UEFI variables (e.g., in a UEFI portion of the non-volatile storage).

In Example 2, the computer system according to example 1 may optionally further include that carrying out the cryptographic operation includes the processor being configured to verify a certificate using the first cryptographic information and second cryptographic information.

In Example 3, the computer system according to example 1 or 2 may optionally further include that the first cryptographic information is or includes a first cryptographic key; and that the second cryptographic information is or includes a second cryptographic key.

In Example 4, the computer system according to example 3 may optionally further include that the first cryptographic key is or includes a private key associated with the cryptographic operation; and that the second cryptographic key is or includes a public key associated with the cryptographic operation.

In Example 5, the computer system according to any one of examples 1 to 4 may optionally further include that the second cryptographic information is or includes an encrypted pair of cryptographic keys associated with the cryptographic operation; and that the first cryptographic information is or includes a cryptographic key to decrypt the encrypted pair of cryptographic keys.

In Example 6, the computer system according to any one of examples 1 to 5 may optionally further include that the second cryptographic information includes metadata related to the computer system and/or to the trusted platform module; and that carrying out the cryptographic operation includes the processor being configured to verify the integrity of the computer system and/or of the TPM by comparing the metadata of the second cryptographic information with predefined metadata related to the computer system and/or to the TPM.

In Example 7, the computer system according to any one of examples 1 to 6 may optionally further include that carrying out the cryptographic operation includes the processor being configured to secure a communication between the computer system and a further device (e.g., a further computer system).

In Example 8, the computer system according to any one of examples 1 to 7 may optionally further include that carrying out the cryptographic operation includes the processor being configured to secure a request for a financial transaction (e.g., a connection via which the financial transaction is communicated).

In Example 9, the computer system according to example 8 may optionally further include that the second cryptographic information is or includes a digital certificate associated with the financial transaction.

In Example 10, the computer system according to any one of examples 1 to 9 may optionally further include that the second cryptographic information is encrypted with a cryptographic key stored in the Trusted Platform Module; and that the processor is configured to instruct the Trusted Platform Module to decrypt the retrieved second cryptographic information.

In Example 11, the computer system according to example 10 may optionally further include that the second cryptographic information is encrypted with a storage root key or one of the keys in the hierarchy under the storage root key of the Trusted Platform Module.

In Example 12, the computer system according to any one of examples 1 to 11 may optionally further include that the second cryptographic information is wrapped or sealed with a cryptographic key stored in the Trusted Platform Module; and that the processor is configured to instruct the Trusted Platform Module to unwrap or unseal the retrieved second cryptographic information.

In Example 13, the computer system according to any one of examples 1 to 12 may optionally further include that the processor is configured to verify whether the second cryptographic information retrieved from the one or more UEFI variables is logically associated with the Trusted Platform Module; and that the processor is configured to use the second cryptographic information to carry out the cryptographic operation in case of positive verification of the logical association.

In Example 14, the computer system according to example 13 may optionally further include that the processor is configured to instruct the Trusted Platform Module to execute an hash function on the second cryptographic information; and that the processor is configured to verify whether the second cryptographic information retrieved from the one or more UEFI variables is logically associated with the Trusted Platform Module by verifying the result of the hash function.

In Example 15, the computer system according to example 13 may optionally further include that the processor is configured to verify whether the second cryptographic information retrieved from the one or more UEFI variables is logically associated with the Trusted Platform Module by verifying whether the second cryptographic information includes Endorsement Certificate information of the Trusted Platform Module.

In Example 16, the computer system according to any one of examples 1 to 15 may optionally further include that the one or more UEFI variables are stored in a non-volatile storage (of the computer system); and that to retrieve the second cryptographic information from the one or more UEFI variables the processor is configured to access the non-volatile storage.

In Example 17, the computer system according to example 16 may optionally further include that the computer system includes a motherboard; and that the motherboard includes (e.g., integrates, or embeds) the non-volatile storage.

In Example 18, the computer system according to example 16 or 17 may optionally further include that the non-volatile storage is a non-volatile random access memory.

In Example 19, the computer system according to example 17 may optionally further include that the Trusted Platform Module is removably coupled to the motherboard or that the Trusted Platform Module is fixed to the motherboard.

In Example 20, the computer system according to any one of examples 1 to 19 may optionally further include that to retrieve the second cryptographic information from the one or more UEFI variables the processor is configured to use a Globally Unique Identifier associated with the one or more UEFI variables to determine a storage location of the second cryptographic information.

In Example 21, the computer system according to any one of examples 1 to 20 may optionally further include that the one or more UEFI variables include a first UEFI variable and a second UEFI variable; and that the processor is configured to retrieve a first part of the second cryptographic information from the first UEFI variable and a second part of the second cryptographic information from the second UEFI variable.

In Example 22, the computer system according to example 21 may optionally further include that the first UEFI variable and the second UEFI variable have the same namespace.

Example 23 is a computer system including: a TPM storing first cryptographic information; a non-volatile storage configured to store UEFI variables, wherein one or more of the UEFI variables store second cryptographic information logically associated with the first cryptographic information; and a processor configured to: carry out a cryptographic operation using the first cryptographic information and the second cryptographic information.

Example 24 is an automated teller machine (ATM) including the computer system according to any one of examples 1 to 23.

Example 25 is a method of carrying out a cryptographic operation (e.g., in a computer system), the method including: carrying out the cryptographic operation using first cryptographic information and second cryptographic information, wherein the first cryptographic information is stored in a Trusted Platform Module, and wherein the second cryptographic information is retrieved from one or more UEFI variables.

In Example 26 the method according to example 25 may include one or more features of any one of examples 1 to 23.

Example 27 is a computer program (product) comprising instructions which, when the program is executed by a computer, cause the computer to carry out the method of example 25 or 26.

Example 28 is a computer system including: a non-volatile storage configured to store UEFI variables; and a processor configured to: generate or receive cryptographic information associated with further cryptographic information stored in a TPM; and cause a writing of the cryptographic information in one or more of the UEFI variables stored in the non-volatile storage. For example, the processor may be configured to allocate part of a UEFI portion of the non-volatile storage to storing the cryptographic information; and cause a writing of the cryptographic information in the allocated part.

In Example 29 the computer system according to example 28 may include one or more features of any one of examples 1 to 23, adapted accordingly.

Example 30 is an automated teller machine (ATM) including the computer system according to example 28 or 29.

Example 31 is a method of storing cryptographic information in a computer system, the method including: generating or receiving cryptographic information associated with further cryptographic information stored in a TPM; and writing the cryptographic information in one or more of the UEFI variables of the computer system. For example the method may include allocating part of a UEFI portion of a non-volatile storage of the computer system to store the cryptographic information; and writing the cryptographic information in the allocated part.

In Example 32 the method according to example 31 may include one or more features of any one of examples 1 to 23.

Example 33 is a computer program (product) comprising instructions which, when the program is executed by a computer, cause the computer to carry out the method of example 31 or 32.

The term "processor" as used herein may be understood as any kind of technological entity that allows handling of data. The data may be handled according to one or more specific functions that the processor may execute. Further, a processor as used herein may be understood as any kind of circuit, e.g., any kind of analog or digital circuit. A processor may thus be or include an analog circuit, digital circuit, mixed-signal circuit, logic circuit (e.g., a hard-wired logic circuit or a programmable logic circuit), microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof.

The word "exemplary" is used herein to mean "serving as an example, instance, or illustration". Any embodiment or design described herein as "exemplary" is not necessarily to be construed as preferred or advantageous over other embodiments or designs.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

All acronyms defined in the above description additionally hold in all claims included herein.

While the invention has been particularly shown and described with reference to specific aspects, it should be understood by those skilled in the art that various changes in form and detail may be made therein without departing from the spirit and scope of the invention as defined by the appended claims. The scope of the invention is thus indicated by the appended claims and all changes, which come within the meaning and range of equivalency of the claims, are therefore intended to be embraced.

## Claims

1. A computer system (200) comprising a processor (202) configured to:
carry out a cryptographic operation (204) using first cryptographic information (206) and second cryptographic information (208),
wherein the first cryptographic information (206) is stored in a Trusted Platform Module (210), and
wherein the processor (202) is configured to retrieve the second cryptographic information (208) from one or more UEFI variables (212).

2. The computer system (200) according to claim 1, further comprising:
the Trusted Platform Module (210) storing the first cryptographic information (206); and
a non-volatile storage (220) storing the one or more UEFI variables (212) storing the second cryptographic information (208).

3. The computer system (200) according to claim 1 or 2,
wherein the first cryptographic information (206) is or comprises a first cryptographic key (302); and
wherein the second cryptographic information (208) is or comprises a second cryptographic key (304).

4. The computer system (200) according to any one of claims 3,
wherein the first cryptographic key (206) is or comprises a private key associated with the cryptographic operation (204); and
wherein the second cryptographic key (206) is or comprises a public key associated with the cryptographic operation (204).

5. The computer system (200) according to claim 1 or 2,
wherein the second cryptographic information (208) is or comprises an encrypted pair of cryptographic keys (306, 308) associated with the cryptographic operation (204); and
wherein the first cryptographic information (208) is or comprises a cryptographic key (302) to decrypt the encrypted pair of cryptographic keys (306, 308).

6. The computer system (200) according to claim 1 or 2,
wherein the second cryptographic information (208) comprises metadata (310) related to the computer system (200) and/or to the trusted platform module (210); and
wherein carrying out the cryptographic operation (204) comprises the processor (202) being configured to verify the integrity of the computer system (200) and/or of the trusted platform module (210) by comparing the metadata (310) of the second cryptographic information (208) with predefined metadata related to the computer system (200) and/or to the trusted platform module (210).

7. The computer system (200) according to any one of claims 1 to 6,
wherein carrying out the cryptographic operation (204) comprises the processor (202) being configured to secure a request for a financial transaction.

8. The computer system (200) according to claim 7,
wherein the second cryptographic information (208) is or comprises a digital certificate (314) associated with the financial transaction.

9. The computer system (200) according to any one of claims 1 to 8,
wherein the second cryptographic information (208) is encrypted with a cryptographic key stored in the Trusted Platform Module (210); and
wherein the processor (202) is configured to instruct the Trusted Platform Module (210) to decrypt the retrieved second cryptographic information (208).

10. The computer system (200) according to any one of claims 1 to 9,
wherein the processor (202) is further configured to verify whether the second cryptographic information (208) retrieved from the one or more UEFI variables (212) is logically associated with the Trusted Platform Module (210); and
wherein the processor (202) is further configured to use the second cryptographic information (208) to carry out the cryptographic operation (204) in case of positive verification of the logical association.

11. A computer system (600) comprising:
a non-volatile storage (302) configured to store UEFI variables (304); and
a processor (608) configured to:
generate or receive cryptographic information (610) associated with further cryptographic information (614) stored in a trusted platform module (614); and
cause a writing of the cryptographic information (610) in one or more of the UEFI variables (604) stored in the non-volatile storage (602).

12. An automated teller machine comprising a computer system (200, 600) according to any one of claims 1 to 11.

13. A method (500) of carrying out a cryptographic operation, the method comprising:
retrieving (520) first cryptographic information from a Trusted Platform Module or accessing (520) the first cryptographic information in the Trusted Platform Module;
retrieving (530) second cryptographic information from one or more UEFI variables; and
carrying out (510) the cryptographic operation using the first cryptographic information and second cryptographic information.

14. A method (700) of storing cryptographic information in a computer system, the method comprising:
generating or receiving (710) cryptographic information associated with further cryptographic information stored in a Trusted Platform Module; and
writing (720) the cryptographic information in one or more of the UEFI variables of the computer system.

15. The method (700) according to claim 14,
wherein writing (720) the cryptographic information in one or more of the UEFI variables of the computer system comprises:
allocating part of a UEFI portion of a non-volatile storage of the computer system to store the cryptographic information; and
writing the cryptographic information in the allocated part of the UEFI portion of the non-volatile storage.
